# EUROPÄISCHE PATENTANMELDUNG

(11) **EP 0 695 939 A2**
(43) Veröffentlichungstag der Anmeldung: **07.02.1996**
(21) Anmeldenummer: 95102125.2
(22) Anmeldetag: 16.02.1995
(51) Int. Cl.: G01N 27/06, B60S 1/08

(54) **Regensensor**

(30) Priorität: 04.08.1994 DE 4427627
(71) Anmelder: LEYBOLD AKTIENGESELLSCHAFT, D-63450 Hanau (DE)
(72) Erfinder: Scherer, Michael, Dr., D-63517 Rodenbach (DE); Werner, Roland, D-63512 Hainburg (DE)

(57) **Zusammenfassung**

Bei einem Feuchtesensor (1) wird das effektive Sensorfeld (4) durch zwei jeweils eine Fächerstruktur aufweisende Sensorelemente (8a, 8b) gebildet. Diese Sensorelemente bestehen aus mittels Magnetronkatodenzerstäubung oder Glimmen auf ein dielektrisches Substrat (2) aufgebrachten Schichten aus einer Metallnitridverbindung, insbesondere einer Chrom-Stickstoff-Verbindung, wobei die Metallnitridschichten auf die mittels Ionensputtern gereinigte Substratfläche abgeschieden werden. Diese Sensorelementenschichten (8a, 8b) weisen eine hohe Härte von ca. 2.000 Vickers auf, wodurch die Sensorelemente (8a, 8b) eine hohe Abriebfestigkeit gegenüber abrasivem Verschleiß, z.B. durch Wischblätter- oder Eiskratzer aufweisen. Der Feuchtesensor ist mit einem geringen elektrischen Flächenwiderstand von < als 100 Ohm/□ herstellbar und gegenüber Umwelteinflüssen, wie z.B. Salzwasser- und/oder Scheibenreinigungsmitteln chemisch stabil. Dadurch eignet sich der vorgeschlagene Feuchtesensor insbesondere zum Einsatz als Regensensor bei Fahrzeugen, wobei der Regensensor vorzugsweise auf einer Fahrzeugfensterscheibe angeordnet ist.

## Beschreibung

Die Erfindung betrifft ein Verfahren zur Herstellung eines Feuchtesensor gemäß dem Oberbegriff des Patentanspruchs 1 sowie ein nach dem Verfahren hergestellter Feuchtesensor gemäß dem Oberbegriff des Patentanspruchs 7.

Derartige Feuchtesensoren wie auch deren Herstellungsverfahren sind bereits bekannt. So wird in der EP 0 507 491 A2 ein Verfahren zur Herstellung eines auf einer Fahrzeugfensterscheibe angeordneten Regensensors beschrieben. Dieser Sensor besteht im wesentlichen aus zwei elektrisch leitenden fächerartig ineinandergreifenden Flächen, die auf einer Glasplatte aufgebracht sind und ein Widerstandselement bilden. Die infolge einer Feuchtigkeitsbelegung der Sensorfläche bewirkte Impedanzänderung dieses Widerstandselementes wird elektronisch registriert und bildet die Sensorausgangsgröße. Die beiden leitfähigen Flächen bestehen aus einer Metalloxidschicht, die pyrolytisch auf dem Glasträger abgeschieden wird. Die endgültige Flächenstruktur nach Formgebung des Glasträgers wird, z.B. mittels Laserätzen oder mittels eines chemischen Ätzverfahrens unter Einsatz einer Fotomaske erzeugt.

Ein Nachteil derartig hergestellter Feuchtesensoren besteht darin, daß die Leitfähigkeit der Metalloxidschicht, z.B. einer Zinnoxidschicht, durch den üblicherweise bei ca. 600 °C durchgeführten Formgebungsprozeß und der anschließenden Härtung der Glasscheibe deutlich reduziert wird, während die Sensorempfindlichkeit herabgesetzt ist.

Der Erfindung liegt die Aufgabe zugrunde, einen Feuchtesensor der eingangs genannten Art zu schaffen, der die oben genannten Nachteile nicht aufweist und darüber hinaus eine hohe Haftfestigkeit auf dem Substrat, eine hohe Abriebsfestigkeit gegenüber abrasivem Verschleiß besitzt und zudem gegenüber Umwelteinflüssen chemisch stabil ist sowie ein Verfahren zur Herstellung eines solchen Feuchtesensors anzugeben.

Dieser Aufgabe wird erfindungsgemäß mit den im kennzeichnenden Teil des Patentanspruchs 1 angegebenen Verfahrensschritten bzw. mit den im Patentanspruch 7 angegebenen Mitteln gelöst.

Bei einem erfindungsgemäßen Feuchtesensor werden die leitfähigen Flächen (Sensorelemente) unter Vakuumbedingungen auf die durch Ionenbeschuß gereinigten und dadurch für den nachfolgenden Beschichtungsvorgang aktivierten Substratoberflächen (Glasoberfläche) abgeschieden. Die Struktur des aus mindestens zwei Sensorelementen bestehenden Sensorfeldes wird mittels einer Fotomaskentechnik erzeugt. Hierzu wird auf dem dielektrischen Substrat eine fotoresistive Schicht aufgebracht, getrocknet, mit einer der Sensorstruktur entsprechenden Fotomaske belegt, das Fotoresist belichtet und danach entwickelt. Die nicht belichteten Teile des Fotoresist werden durch die Entwicklersubstanz abgelöst und es entsteht eine Negativstruktur des Sensorfeldes. Die anschließende Reinigung der freigelegten Substratbereiche mittels Ionenbeschuß hat den Vorteil, daß auf dem Substrat abgelöste Verunreinigungen vollständig entfernt werden können und eine die Substratfläche verunreinigende Wiederbelegung bis zum nächsten Verfahrensschritt, nämlich dem Aufbringen der leitenden Schicht, verhindert wird. Weiterhin bewirkt der Ionenbeschuß vorteilhaft eine Aktivierung der zu beschichtenden Substratoberfläche, was zu einer höheren Haftfestigkeit der aufzubringenden leitfähigen Schicht beiträgt.

Dieses Ionensputterreinigungsverfahren ist erfindungsgemäß sowohl mittels einer Glimmentladung in Edelgas, vorzugsweise Argon, und/oder 0₂-Gas bzw. mittels eines Hochfrequenz-Sputterätzverfahrens durchführbar. Die hierbei einzustellenden Prozeßparameter haben z.B. folgende Werte:

| | |
|---|---|
| p_{Argon} | = 2 x 10⁻³ mbar |
| P_{HF} | = 900 W |
| U_{DC} | = 550 V |
| t | = 60 sec. |

Die nach Reinigung der Substratnegativstruktur aufzubringende sensorbildende Schicht wird vorzugsweise durch reaktives Magnetronsputtern auf dem Substrat abgeschieden. Als sensorbildende Schicht ist eine Metallnitridverbindung, vorzugsweise eine Chrom-Stickstoff-Verbindung gewählt. Als besonders vorteilhaft hat sich reaktives DC-Magnetron-Sputtern von CrNₓ in einer Argon/Stickstoffatmosphäre erwiesen. Der DC-Magnetron-Sputterprozeß wird mit folgenden Prozeßparameterwerten vorteilhaft durchgeführt:

| | |
|---|---|
| pₛₚᵤₜₜₑᵣₙ | = 6 x 10⁻³ mbar |
| P_{DC} | = 4 kW |
| tₛₚᵤₜₜₑᵣₙ | = 20 sec. |

Die derartig erzeugte Chromnitridschicht weist ein Anteilsverhältnis von Chrom:Stickstoff = 55:45 %, eine Schichtdicke von d_{CrNx} = 100 nm und ein Flächenwiderstand R_{□} = 50 Ohm/□ auf. Mit anderen Prozeßparameterwerten sind Schichtdicken, wie im Unteranspruch 4 angegeben, von 20 nm bis 500 nm, vorzugsweise jedoch von 100 nm, auf dem Substrat abscheidbar. Für den elektrischen Flächenwiderstand R_{□} sind entsprechend Unteranspruch 11 Werte kleiner als 300 Ohm/□, vorzugsweise solche < als 100 Ohm/□, vorgesehen. Kleinere elektrische Flächenwiderstände haben den Vorteil, daß die Sensorempfindlichkeit dadurch erhöht ist. Vorteilhaft kann die Metallnitridschicht auch Sauerstoff enthalten (siehe Unteranspruch 9).

Im abschließenden Verfahrensschritt wird die belichtete und noch auf dem Substrat (vorzugsweise einem Glassubstrat) haftende Fotoresistschicht naßchemisch abgelöst.

Die derartig auf dem Glassubstrat abgeschiedenen Chromnitrid-Schichten sind überraschenderweise sehr hart, und besitzen vorteilhaft eine Härte von ca. 2.000 Vickers und sind chemisch stabil gegenüber umweltbedingten Einwirkungen, insbesondere solchen durch Luftverschmutzung, durch Salzwasser, durch Temperaturwechsel und Scheibenreinigungsmittel. In Kombination mit der härtebedingten hohen Abriebfestigkeit gegenüber abrasivem Verschleiß eignen sich derartige Feuchtesensoren insbesondere zur Verwendung als Regensensor auf der Außenfläche einer Fahrzeugfensterscheibe nach Anspruch 14, die in bekannter Weise einem hohen abrasivem Verschleiß durch Einsatz von Wischblättern, Eiskratzern oder sonstigen Hartteilchenbeschuß ausgesetzt ist.

Weitere, bevorzugte Ausführungsformen sind in den abhängigen Ansprüchen offenbart.

Nachfolgend wird ein besonders vorteilhaftes Ausführungsbeispiel der Erfindung anhand der einzigen Zeichnung näher erläutert.

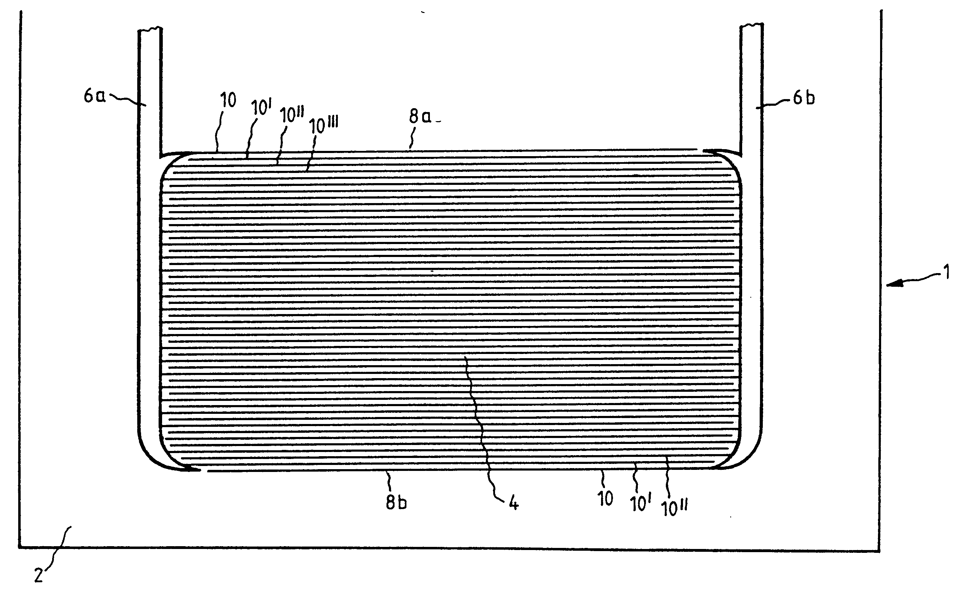

Der in Figur 1 dargestellte Feuchtesensor 1 besteht im wesentlichen aus zwei flächigen Sensorelementen 8a und 8b, die auf einem gemeinsamen dielektrischen Substrat 2 angeordnet sind. Die einzelnen Sensorelemente 8a bzw. 8b bestehen aus parallel zueinander verlaufenden Leiterbahnen 10, 10', 10'', 10''', ..., die endseitig jeweils mit einem elektrischen Anschluß 6a bzw. 6b leitend verbunden sind. Die freien Enden der Leiterbahnen 10, 10', 10'', 10''', ... der einzelnen Sensorelemente 8a bzw. 8b ragen fächerartig ineinander, wobei die Leiterbahnen 10, 10'', ... des Sensorelementes 8a abwechselnd zu Leiterbahnen 10', 10'', ... des Sensorelementes 8b zueinander parallel verlaufend, angeordnet sind. Bei Benetzung des Sensorfeldes 4, z.B. durch einen Wassertropfen, ändert sich der elektrische Widerstand zwischen den Sensorelementen 8a und 8b. Diese Impedanzänderung ist mittels einer geeigneten und in der Figur 1 nicht dargestellten mit den elektrischen Anschlüssen 6a und 6b verbundenen Sensorelektronik registrierbar und zur weiteren Steuerung, z.B. zur Inbetriebnahme eines Wischermotors verwendbar.

### Bezugszeichenliste:

- 1: Feuchtesensor
- 2: Dielektrikum, Glasscheibe
- 4: Sensorfeld, Sensorflächenstruktur
- 6a, 6b: elektrischer Anschluß
- 8a, 8b: Sensorelement
- 10', 10'', 10''', ...: Leiterbahnen
- p_{Argon}: Argonpartialdruck
- p_{HF}: elektrische Leistung der Hochfrequenz des Sputterätzverfahrens
- U_{DC}: Gleichspannung für den Glimmentladebetrieb
- t: Zeitdauer des Ionensputterreinigungsverfahrens
- pₛₚᵤₜₜₑᵣₙ: Vakuumkammerdruck während des Sputterprozesses
- p_{DC}: elektrische Leistung der Sputterkatode während des DC-Magnetron-Sputterprozesses
- tₛₚᵤₜₜₑᵣₙ: Zeitdauer des DC-Magnetron-Sputterprozesses

## Patentansprüche

1. Verfahren zur Herstellung eines auf einem dielektrischen Substrat angeordneten Feuchtesensors, der mindestens zwei elektrisch leitende, zueinander benachbarte, isoliert angeordnete, ein Sensorfeld bildende Sensorelemente aufweist, welche im Zusammenwirken mit das Sensorfeld benetzende elektrisch leitfähige Substanzen, vorzugsweise Wasser, einen seine Impedanz ändernden Widerstand bildet, **gekennzeichnet dadurch,** daß die Herstellung des Feuchtesensors folgende Verfahrensschritte umfaßt:
- Beschichten des dielektrischen Substrats (2) mit einer fotoresistiven Substanz und anschließende Trocknung der fotoresistiven Schicht,
- Bedecken der getrockneten Fotoresistschicht mit einer der Form der Sensorelemente (8a, 8b) entsprechenden Fotomaske,
- Belichten der nicht maskierten Fotoresistschicht,
- Entfernen der Fotomaske,
- Entwickeln der Fotoresistschicht, wobei die nicht belichteten Fotoresistflächen durch die Entwicklersubstanz von dem Substrat abgelöst werden, wodurch ein Negativabbild der Sensorflächenstruktur (4) entsteht,
- Reinigung der freigelegten Substratflächen (2) durch Ionenbeschuß im Vakuum,
- Beschichten der Substratfläche (2) mit einer die Sensorelemente (8a, 8b) bildenden leitfähigen Schicht,
- Entfernen der belichteten, auf dem Substrat (2) haftenden Fotoresistschicht.

2. Verfahren nach Anspruch 1, **dadurch gekennzeichnet**, daß der zur Reinigung der Substratfläche (2) durchgeführte Ionenbeschuß mittels Hochfrequenz-Sputterätzen und/oder mittels einer Glimmentladung erfolgt.

3. Verfahren nach Anspruch 1 und/oder 2, **dadurch gekennzeichnet**, daß als Prozeßgas für das Hochfrequenz-Sputterätzen ein Edelgas, vorzugsweise Argon, und/oder Sauerstoff verwendet wird.

4. Verfahren nach mindestens einem der Ansprüche 1 bis 3, **dadurch gekennzeichnet**, daß die leitfähigen Sensorelemente (8a, 8b) in einer Schichtdicke von 20 nm - 500 nm, vorzugsweise 100 nm, abgeschieden werden.

5. Verfahren nach mindestens einem der Ansprüche 1 bis 4, **dadurch gekennzeichnet,** daß die leitfähigen Sensorelemente (8a, 8b) aus einer Metallnitridverbindung gebildet werden.

6. Verfahren nach mindestens einem der Ansprüche 1 bis 5, **dadurch gekennzeichnet**, daß als Metallnitrid eine Chrom-Stickstoff-Verbindung verwendet wird.

7. Feuchtesensor, hergestellt nach mindestens einem der in den Ansprüchen 1 bis 6 angegebenen Verfahren, angeordnet auf einem dielektrischen Substrat, wobei der Feuchtesensor mindestens zwei elektrisch leitende zueinander isoliert benachbarte, ein Sensorfeld bildende Sensorelemente (8a, 8b) aufweist, welche im Zusammenwirken mit das Sensorfeld (4) benetzende elektrisch leitfähige Substanzen, vorzugsweise Wasser, ein seine Impedanz ändernder Widerstand bildet, **dadurch gekennzeichnet**, daß die Sensorelemente (8a, 8b) aus einer Metallnitridschicht bestehen.

8. Feuchtesensor nach Anspruch 7, **dadurch gekennzeichnet**, daß die Metallnitridschicht (8a, 8b) aus einer Chrom-Nitrid-Verbindung besteht.

9. Feuchtesensor nach Anspruch 7 und/oder 8, **dadurch gekennzeichnet**, daß die Metallnitridschicht (8a, 8b) Sauerstoff enthält.

10. Feuchtesensor nach mindestens einem der Ansprüche 7 bis 9, **dadurch gekennzeichnet**, daß die Schichtdicke der Metallnitridschicht (8a, 8b) 20 nm bis 500 nm, vorzugsweise 100 nm, beträgt.

11. Feuchtesensor nach mindestens einem der Ansprüche 7 bis 10, **dadurch gekennzeichnet**, daß die Metallnitridschicht einen Flächenwiderstand von kleiner als 300 Ohm/□, vorzugsweise kleiner als 100 Ohm/□ aufweist.

12. Feuchtesensor nach mindestens der Ansprüche 7 bis 11, **dadurch gekennzeichnet**, daß das dielektrische Substrat (2) aus Glas besteht.

13. Feuchtesensor nach mindestens einem der Ansprüche 7 bis 12, **dadurch gekennzeichnet**, daß die Sensorelemente (8a, 8b) aus fächerartig zueinander angeordneten Leiterbahnen (10', 10'', 10''', ...) bestehen, wobei die beiden Sensorelemente (8a, 8b) fächerartig ineinander angeordnet sind, wodurch das effektive Sensorfeld (4) vergrößert ist.

14. Verwendung eines nach mindestens einem der in den Ansprüchen 1 bis 6 hergestellten Feuchtesensors und eines Feuchtesensors nach mindestens einem der Ansprüche 7 bis 13 als auf einer Autofensterglasscheibe angeordneter Regensensor.
